# FASCICULE DE BREVET EUROPEEN

(11) **EP 1 995 137 B1**
(45) Date de publication et mention de la délivrance du brevet: **12.10.2011**
(21) Numéro de dépôt: 08104011.5
(22) Date de dépôt: 19.05.2008
(51) Int. Cl.: B60T 11/16

(54) **Maître-cylindre comportant une rainure hélicoïdale de réalimentation**
Hauptbremszylinder, der eine Spiralnut zum Nachfüllen der Bremse umfasst
Master cylinder comprising a helical feedback groove

(30) Priorité: 21.05.2007 FR 0703599
(43) Date de publication de la demande: 26.11.2008
(73) Titulaire: Robert Bosch GmbH, 70442 Stuttgart (DE)
(72) Inventeur: Gaffe, François, 93140, BONDY - FRANCE (FR); Auguste, Antony, 94350, VILLIER SUR MARNE (FR); Lhuillier, Laurent, 93150, LE BLANC MESNIL (FR); Wasson, Andrew, WOOSTER, OH 44691 (US)
(74) Mandataire: Hurwic, Aleksander Wiktor

(56) Documents cités:
- EP-A- 1 767 423
- WO-A-02/062642
- US-A1- 2005 115 237

## Description

L'invention concerne un maître-cylindre de freinage pour un véhicule automobile.

L'invention concerne plus particulièrement un maître-cylindre de freinage pour un véhicule automobile, du type qui comporte un corps sensiblement axial à l'intérieur d'un alésage duquel est monté coulissant au moins un piston axial, qui est susceptible d'être actionné par un conducteur du véhicule entre une position arrière de repos et une position avant d'application d'un effort de freinage, et qui est rappelé élastiquement vers sa position arrière de repos à l'encontre d'une butée formée dans le corps, du type dans lequel l'alésage comporte deux joints d'étanchéité avant et arrière qui sont interposés entre le piston et l'alésage, le joint d'étanchéité avant délimitant dans l'alésage une chambre d'alimentation arrière et une chambre de pression avant, du type dans lequel le corps comporte un conduit radial d'alimentation qui relie un réservoir extérieur de fluide hydraulique à la chambre d'alimentation arrière et qui débouche entre les deux joints d'étanchéité, du type dans lequel le corps comporte un perçage d'alimentation d'un circuit de freinage qui débouche dans la chambre de pression avant, du type dans lequel le piston comporte un alésage ouvert vers l'avant communiquant d'une part avec la chambre de pression avant et d'autre part avec la périphérie dudit piston par l'intermédiaire d'au moins un perçage qui, lorsque le piston occupe sa position arrière de repos, est agencé entre les deux joints d'étanchéité pour mettre en communication la chambre de pression avant et la chambre d'alimentation arrière et qui, lorsque le piston est mû axialement vers l'avant vers sa position d'application, est susceptible de franchir le joint d'étanchéité avant pour isoler la chambre de pression avant de la chambre d'alimentation arrière et permettre ainsi l'établissement d'une pression de freinage dans la chambre de pression avant, du type dans lequel au moins chaque joint d'étanchéité avant comporte au moins une lèvre, agencée au contact de la périphérie du piston, qui est susceptible, lorsque la chambre avant de pression est soumise à une dépression causée par le retour du piston de sa position avant d'application à sa position de repos ou bien par l'activation d'un dispositif de contrôle de trajectoire faisant partie du circuit de freinage, de se décoller de la périphérie du piston pour permettre respectivement la réalimentation du réservoir à l'aide de la chambre de pression avant ou bien la réalimentation de la chambre de pression avant par le réservoir.

On connaît de nombreux exemples de maîtres-cylindres de freinage de ce type.

Dans la plupart des maîtres-cylindres de ce type, le piston est généralement guidé dans l'alésage par l'intermédiaire d'au moins deux portées annulaires de l'alésage, qui sont agencées respectivement en avant du joint d'étanchéité avant et en arrière du joint d'étanchéité arrière.

La portée qui est agencée en avant du joint d'étanchéité avant jouxte la gorge de réception du joint d'étanchéité avant et elle comporte des rainures de dites de réalimentation qui sont destinées à permettre le passage du liquide de freinage dans les rainures lorsque la chambre avant de pression est soumise à une dépression causée par le retour du piston de sa position avant d'application à sa position de repos ou bien lorsqu'un dispositif de contrôle de trajectoire de type "ESP" du circuit de freinage est activé et crée une dépression dans la chambre avant de pression (voir WO 02/062642).

Dans ces condition, le joint d'étanchéité avant se décolle de la périphérie du piston sous l'influence de la dépression à laquelle il est soumis, ceci afin de permettre respectivement la réalimentation du réservoir à l'aide de la chambre de pression avant ou bien la réalimentation de la chambre de pression avant par le réservoir.

Conventionnellement, les rainures de réalimentation sont réalisées sous la forme d'une pluralité de rainures hélicoïdales parallèles de taille réduite, cette taille étant imposée par la longueur réduite de la portée qui est agencée en avant du joint d'étanchéité avant.

Or, on a constaté que dans bien des cas, le débit de liquide de freinage était insuffisant pour que la réalimentation s'effectue correctement.

Ceci est particulièrement flagrant lorsque le véhicule est équipé d'un dispositif de contrôle de trajectoire de type "ESP" pour lequel le besoin de liquide de freinage, qui est destiné à alimenter un ou plusieurs des étriers de frein du véhicule, peut être important même lorsque le piston occupe une position d'application dans la chambre de pression. Un débit insuffisant peut conduire à un défaut d'efficacité, ou du moins à une lenteur de réaction préjudiciable du dispositif de contrôle de trajectoire de type "ESP".

Pour remédier à cet inconvénient, l'invention propose maître-cylindre de freinage comportant des moyens d'augmentation du débit de réalimentation.

Dans ce but, l'invention propose un maître-cylindre de freinage du type décrit précédemment, caractérisé en ce qu'il comporte au moins une rainure de largeur élevée, qui est formée dans l'alésage en avant d'une gorge de réception du joint d'étanchéité avant, qui s'étend au moins en partie autour du piston, qui communique avec ladite gorge de réception et le perçage du piston, pour permettre les réalimentations suivant un débit élevé.

Selon d'autres caractéristiques de l'invention :
- la rainure est une rainure hélicoïdale de pas élevé déterminé,
- la rainure hélicoïdale s'étend axialement sur une distance inférieure au pas déterminé,
- la rainure débouche directement dans la gorge de réception du joint d'étanchéité avant,
- le maître-cylindre comporte au plus deux rainures de largeur élevée associées à la gorge de réception du joint d'étanchéité avant et au piston,
- le maître cylindre est de type tandem et il comporte dans son corps sensiblement axial un alésage à l'intérieur duquel sont montés coulissants deux pistons axiaux, deux joints d'étanchéité avant, et dans lequel sont formées au moins deux et au plus quatre rainures associées.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective avec arrachement du corps d'un maître-cylindre de type "tandem" selon l'invention,
- la figure 2 est une vue en coupe axiale d'un maître-cylindre de type "tandem" avec ses pistons représentés en position de repos ;
- la figure 3 est une vue en coupe axiale d'un maître-cylindre de type "tandem" avec ses pistons représentés en position d'actionnement.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

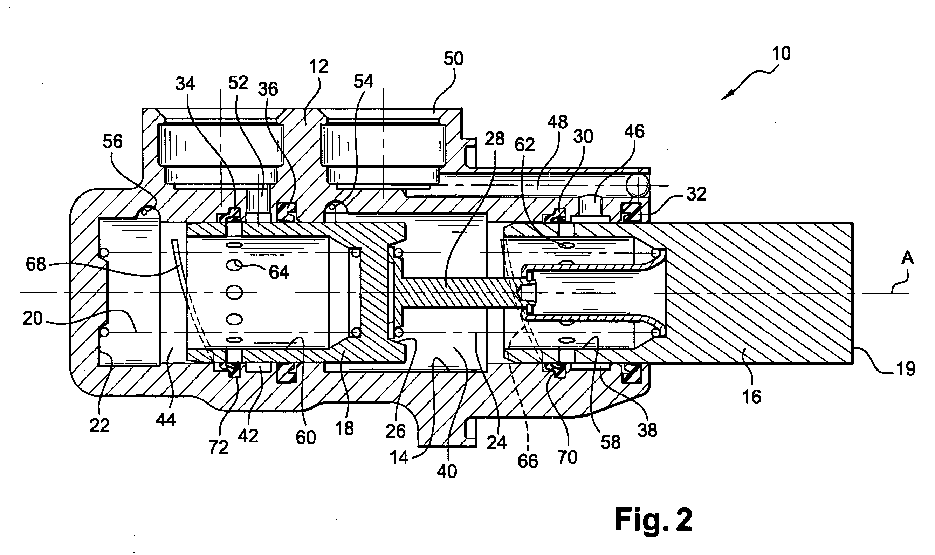

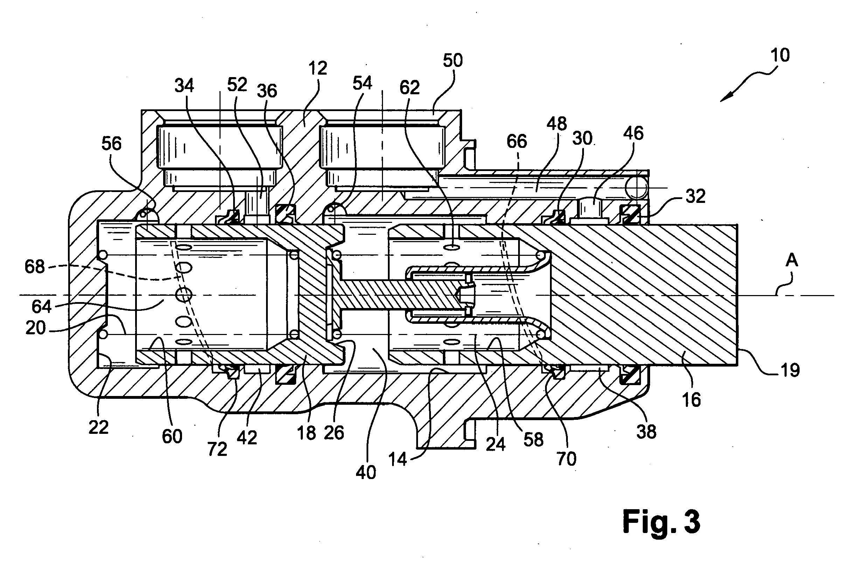

On a représenté sur les figures 2 et 3 l'ensemble d'un maître-cylindre 10 de freinage pour un véhicule automobile.

De manière connue, le maître-cylindre 10 comporte un corps 12 sensiblement axial d'axe "A" à l'intérieur d'un alésage 14 duquel est monté coulissant au moins un piston axial.

Dans le mode de réalisation préféré de l'invention, le maître-cylindre 10 est un maître-cylindre de type "tandem" qui comporte un corps 12 sensiblement axial d'axe A à l'intérieur d'un alésage 14 duquel sont montés coulissants deux pistons axiaux 16 et 18.

Cette configuration n'est toutefois pas limitative de l'invention et le maître-cylindre 10 pourrait être un maître-cylindre simple ne comportant qu'un seul piston coulissant.

Le piston 16, dit piston primaire 16, est destiné à permettre l'établissement d'une pression hydraulique dans un circuit primaire de freinage du véhicule (non représenté), et le piston 18, dit piston secondaire 18, est destiné à permettre l'établissement d'une pression hydraulique dans un circuit secondaire de freinage du véhicule (non représenté) qui est indépendant du circuit primaire de freinage du véhicule.

Chacun de ces deux circuit est associé à un dispositif de contrôle de trajectoire qui est susceptible de commander l'actionnement d'organes de freinages du véhicule, tels que des étriers de frein, de manière indépendante du maître-cylindre.

Le piston primaire 16 est susceptible d'être actionné directement par un conducteur du véhicule. Par exemple, une extrémité arrière 19 du piston primaire 16 est susceptible d'être reliée à un servomoteur (non représenté) qui amplifie les efforts exercés sur une pédale de freinage du véhicule.

Le piston secondaire 18 est susceptible d'être actionné indirectement par le conducteur du véhicule, notamment par le piston primaire 16.

Chaque piston primaire 16 ou secondaire 18 est ainsi mobile entre une position arrière de repos, qui est représentée à la figure 2, et au moins une position avant d'application d'un effort de freinage, qui a été représentée à la figure 3.

De manière connue, chaque piston primaire 16 ou secondaire 18 est rappelé élastiquement vers sa position arrière de repos, par exemple à l'encontre d'une butée (non représentée).

En particulier, le piston secondaire 18 est rappelé vers l'arrière par un ressort 20 qui prend appui sur une face 22 transversale d'extrémité avant de l'alésage 14 et sur le piston secondaire 18, et le piston primaire 16 est rappelé élastiquement vers l'arrière par un ressort 24 qui prend appui sur une face 26 transversale arrière du piston secondaire 18 et sur le piston primaire 16. Plus particulièrement, le ressort 24 étant notamment de grande longueur, il est monté autour d'un vérin coulissant 28 qui est interposé entre la face 26 transversale arrière du piston secondaire 18 et le piston primaire 16.

L'alésage 14 comporte deux joints primaires d'étanchéité avant 30 et arrière 32 qui sont interposés respectivement entre le piston primaire 16 et l'alésage 14 et deux joints secondaires d'étanchéité avant 34 et arrière 36 qui sont interposés respectivement entre le piston secondaire 18 et l'alésage 14.

De ce fait, le joint primaire d'étanchéité avant 30 délimite dans l'alésage 14 une chambre 38 d'alimentation arrière et une chambre 40 de pression avant. De même, le joint secondaire d'étanchéité avant 34 délimite dans l'alésage 14 une chambre 42 d'alimentation arrière et une chambre 44 de pression avant.

Le corps 12 comporte un conduit 46 primaire radial d'alimentation qui relie un réservoir extérieur primaire (non représenté) de fluide hydraulique à la chambre d'alimentation primaire arrière 38 et qui débouche entre les deux joints primaires d'étanchéité 30 et 32.

En particulier, le conduit 46 primaire radial d'alimentation est par exemple relié par l'intermédiaire d'un conduit longitudinal intermédiaire 48 à un orifice 50 qui débouche à l'extérieur du corps 14 et qui est destiné à recevoir une bouche de sortie (non représentée) du réservoir primaire associé.

Le corps 12 comporte un conduit 52 secondaire radial d'alimentation qui relie un réservoir extérieur secondaire (non représenté) de fluide hydraulique à la chambre d'alimentation secondaire arrière 42 et qui débouche entre les deux joints secondaires d'étanchéité 34 et 36.

Le corps comporte encore deux perçages primaire 54 et secondaire 56 d'alimentation des circuits de freinage primaire et secondaires associés qui débouchent dans les chambres avant de pression primaire 40 et secondaire 44 associées.

De manière connue, chaque piston 16, 18 comporte un alésage 58, 60 ouvert vers l'avant communiquant d'une part avec la chambre 40, 44 de pression avant associée et d'autre part avec la périphérie dudit piston 16,18 par l'intermédiaire d'au moins un perçage 62, 64 dont la position par rapport au joint d'étanchéité associé avant primaire ou secondaire 30, 34 détermine la mise en communication sélective des chambres arrière d'alimentation primaire et secondaire 38, 42 avec les chambres de pression avant primaire et secondaire 40, 44.

En effet, lorsque le piston 16, 18 occupe sa position arrière de repos de la figure 2, le perçage associé 62, 64 est agencé entre les deux joints d'étanchéité primaire 30, 32 et secondaire 34, 36 pour mettre en communication la chambre de pression avant 40, 44 et la chambre d'alimentation arrière 38, 42.

Lorsque le piston 16, 18 est mû axialement vers l'avant vers sa position d'application de la figure 3, le perçage 62, 64 franchit le joint d'étanchéité avant 30, 34 pour isoler la chambre de pression avant 40, 44 de la chambre d'alimentation arrière 38, 42, ce qui permet l'établissement d'une pression de freinage dans chaque chambre de pression avant 40, 44.

Par ailleurs, chaque joint d'étanchéité avant 30, 34 comporte au moins une lèvre qui est agencée au contact de la périphérie du piston 16, 18 correspondant.

Lorsque le piston 16, 18 revient de sa position avant d'application à sa position de repos, ou lorsqu'un dispositif de contrôle de trajectoire faisant partie du circuit de freinage relié au circuits de freinage primaire et secondaire est activé, comme représenté à la figure 3, il se crée une dépression dans les chambres de pression avant primaire et secondaire 40, 44, ce qui a pour effet de décoller la lèvre du joint d'étanchéité avant 30, 34 de la périphérie du piston 16, 18.

Le décollement de la lèvre du joint permet la réalimentation des conduits primaire 46 et secondaire 52 radiaux d'alimentation, et donc des réservoirs associés, par les chambres de pression avant primaire et secondaire 40, 44, lorsque le piston 16, 18 revient de sa position avant d'application à sa position de repos.

D'une manière analogue, le décollement de la lèvre du joint, permet la réalimentation des chambres de pression avant primaire et secondaire 40, 44 par les conduits primaire 46 et secondaire 52 radiaux d'alimentation, et donc par les réservoirs associés, lorsqu'un dispositif de contrôle de trajectoire du circuit de freinage relié au circuits de freinage primaire et secondaire est activé.

Dans un maître cylindre conventionnel (non représenté) une portée qui est agencée en avant du joint d'étanchéité avant jouxte la gorge de réception du joint d'étanchéité avant et comporte des rainures dites "de réalimentation" qui sont destinées à faciliter le passage du liquide de freinage comme précédemment évoqué.

Ces rainures sont généralement réalisées sous la forme d'une pluralité de rainures hélicoïdales parallèles de taille réduite, cette taille étant imposée par la longueur réduite de la portée qui est agencée en avant du joint d'étanchéité avant.

Or, on a constaté que dans bien des cas, le débit de liquide de freinage était insuffisant pour que la réalimentation s'effectue correctement.

L'invention propose de remédier à cet inconvénient en proposant un maître-cylindre 10 de freinage comportant des moyens d'augmentation du débit de réalimentation.

Dans ce but, l'invention propose un maitre-cylindre 10 de freinage du type décrit précédemment, caractérisé en ce qu'il comporte au moins une rainure 66, 68 de largeur élevée, qui est formée dans l'alésage en avant d'une gorge 70, 72 de réception du joint 30, 34 d'étanchéité avant, qui s'étend au moins en partie autour du piston 16, 18, qui communique avec ladite gorge 70, 72 de réception et le perçage 62, 64 du piston 16, 18, pour permettre les réalimentations suivant un débit élevé.

Ainsi, comme l'illustre la figure 2, lorsque le piston 16, 18 occupe sa position de repos une réalimentation peut être effectuée uniquement par les perçages 62, 64 du piston 16, 18.

Lorsque le piston 16, 18 revient de sa position avant d'application à sa position de repos, ou lorsqu'un dispositif de contrôle de trajectoire faisant partie du circuit de freinage relié au circuits de freinage primaire et secondaire est activé, comme représenté à la figure 3, la réalimentation s'effectue , dans un sens ou dans l'autre, en cheminant par les perçages 62, 64, la rainure 66, 68, la gorge 70, 72 de réception du joint 30, 34 d'étanchéité, le joint 30, 34 d'étanchéité dont la lèvre est décollée, et la périphérie du piston 16, 18.

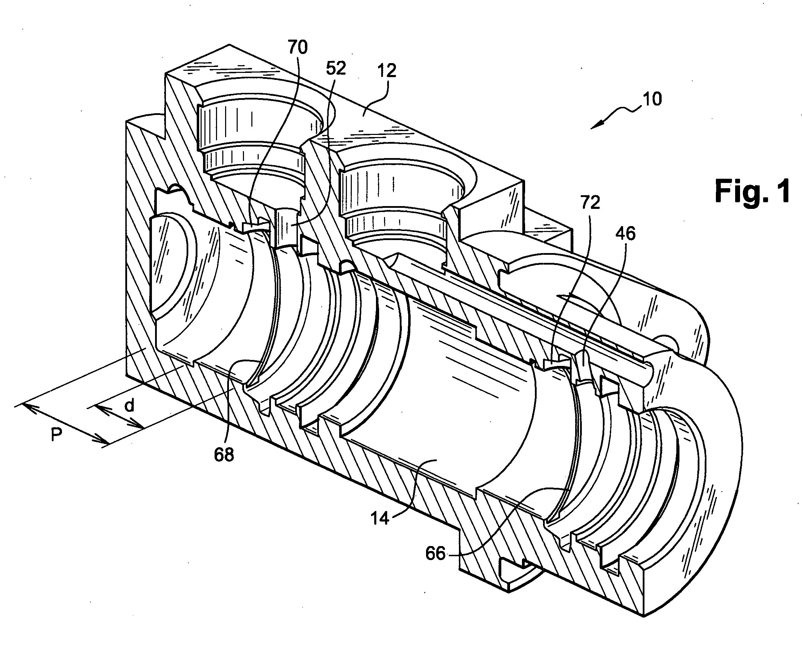

Plus particulièrement, comme l'illustre la figure 1, la rainure 66, 68 est une rainure hélicoïdale de pas "p" élevé déterminé. A titre d'exemple, et de manière non limitative de l'invention, ce pas "p" est d'environ 15 à 25 mm.

La rainure 66, 68 ne s'étend pas nécessairement tout autour du piston 16, 18. II suffit qu'elle s'étende angulairement sur environ 120 degrés pour permettre une réalimentation correcte. A cet effet, la rainure hélicoïdale 66, 38 s'étend axialement sur une distance "d" inférieure au pas "p" déterminé.

Pour permettre une communication adéquate de la rainure 66, 68 avec la gorge 70, 72 de réception du joint 30, 34 d'étanchéité avant la rainure 66, 68 débouche directement dans la gorge 70, 72 de réception du joint 30, 34 d'étanchéité avant.

Il est bien entendu possible d'augmenter le nombre de rainures hélicoïdales 66, 68 pour augmenter le débit de réalimentation. Toutefois, ces rainures 66, 68, étant formées par un outil d'usinage après la réalisation de l'alésage 14, et non par moulage lors du moulage du corps 14, leur nombre doit en être limité pour permettre une réalisation correcte des dites rainures 66, 68.

De plus, ces rainures 66, 68 étant chacune de taille élevée, un nombre trop élevé de rainures pénaliserait le guidage des pistons 16, 18.

A cet effet, le maître-cylindre 10 comporte au plus deux rainures 66, 68 de largeur élevée associées à chaque gorge 70, 72 de réception du joint d'étanchéité avant et à chaque piston 16.

Il sera donc compris que le maître cylindre étant un maître cylindre de type tandem, il comporte au moins deux et au plus quatre rainures associées aux pistons 16, 18.

L'invention permet donc de disposer d'un maître-cylindre permettant des réalimentations rapides des réservoirs de liquide de freinage et/ou des circuits de freinage associés.

## Revendications

1. Maître-cylindre (10) de freinage pour un véhicule automobile, du type qui comporte un corps (12) sensiblement axial à l'intérieur d'un alésage (14) duquel est monté coulissant au moins un piston axial (16, 18), qui est susceptible d'être actionné par un conducteur du véhicule entre une position arrière de repos et une position avant d'application d'un effort de freinage, et qui est rappelé élastiquement vers sa position arrière de repos, du type dans lequel l'alésage (14) comporte deux joints d'étanchéité avant (30, 34) et arrière (32, 36) qui sont interposés entre le piston (16, 18) et l'alésage (14), le joint d'étanchéité avant (30, 34) délimitant dans l'alésage (14) une chambre d'alimentation arrière (38, 42) et une chambre de pression avant (40, 44), du type dans lequel le corps (12) comporte un conduit radial (46, 52) d'alimentation qui relie un réservoir extérieur de fluide hydraulique à la chambre d'alimentation arrière (38, 42) et qui débouche entre les deux joints d'étanchéité (30, 32, 34, 36), du type dans lequel le corps (12) comporte un perçage (54, 56) d'alimentation d'un circuit de freinage qui débouche dans la chambre de pression avant (40, 44), du type dans lequel le piston comporte un alésage (58, 60) ouvert vers l'avant communiquant d'une part avec la chambre (40, 44) de pression avant et d'autre part avec la périphérie dudit piston (16, 18) par l'intermédiaire d'au moins un perçage (62, 64) qui, lorsque le piston (16, 18) occupe sa position arrière de repos, est agencé entre les deux joints d'étanchéité (30, 32, 34, 36) pour mettre en communication la chambre de pression avant (40, 44) et la chambre d'alimentation arrière (38, 42) et qui, lorsque le piston (16, 18) est mû axialement vers l'avant vers sa position d'application, est susceptible de franchir le joint d'étanchéité avant (30, 34) pour isoler la chambre de pression avant (40, 44) de la chambre d'alimentation arrière (38, 42) et permettre ainsi l'établissement d'une pression de freinage dans la chambre de pression avant (40, 44), du type dans lequel au moins chaque joint d'étanchéité avant (30, 34) comporte au moins une lèvre, agencée au contact de la périphérie du piston (16, 18), qui est susceptible, lorsque la chambre avant de pression (40, 44) est soumise à une dépression causée par le retour du piston (16, 18) de sa position avant d'application à sa position de repos ou bien par l'activation d'un dispositif de contrôle de trajectoire faisant partie du circuit de freinage, de se décoller de la périphérie du piston (16, 18) pour permettre respectivement la réalimentation du réservoir à l'aide de la chambre de pression avant (40, 44) ou bien la réalimentation de la chambre de pression avant (40, 44) par le réservoir,
**caractérisé en ce qu'**il comporte au moins une rainure (66, 68) de largeur élevée, qui est formée dans l'alésage (14) en avant d'une gorge (70,72) de réception du joint d'étanchéité avant (30, 34), qui s'étend au moins en partie autour du piston (16, 18), qui communique avec ladite gorge (70, 72) de réception et le perçage (62, 64) du piston, pour permettre les réalimentations suivant un débit élevé et **en ce que** ladite gorge (70, 72) est délimitée à l'avant par ledit alésage munie de ladite rainure (66, 68) et à l'arrière par une portée sans rainure.

2. Maître-cylindre (10) de freinage selon la revendication précédente, **caractérisé en ce que** la rainure (66, 68) est une rainure hélicoïdale de pas (p) élevé déterminé.

3. Maître-cylindre (10) de freinage selon la revendication précédente, **caractérisé en ce que** la rainure (66, 68) hélicoïdale s'étend axialement sur une distance (d) inférieure au pas déterminé (p).

4. Maître cylindre (10) de freinage selon l'une quelconque des revendications précédentes, **caractérisé en ce que** la rainure (66, 68) débouche directement dans la gorge (70, 72) de réception du joint (30, 34) d'étanchéité avant.

5. Maître-cylindre (10) selon l'une quelconque des revendications précédentes, **caractérisé en ce qu'**il comporte au plus deux rainures (66, 68) de largeur élevée associées à la gorge (70, 72) de réception du joint (30, 34) d'étanchéité avant et au piston (16, 18).

6. Maître cylindre (10) selon l'une quelconque des revendications précédentes, **caractérisé en ce qu'**il est de type tandem et comporte dans son corps (12) sensiblement axial un alésage à l'intérieur duquel sont montés coulissants deux pistons axiaux (16, 18), deux joints (30, 34) d'étanchéité avant, et dans lequel sont formées au moins deux et au plus quatre rainures (66, 68) associées.

## Claims

1. Brake master cylinder (10) for a motor vehicle, of the type which comprises a substantially axial body (12) inside a bore (14) of which is slideably mounted at least one axial piston (16, 18) which is capable of being actuated by a driver of the vehicle between a rear rest position and a forward braking force application position, and which is returned elastically toward its rear rest position, of the type in which the bore (14) comprises two seals, front (30, 34) and rear (32, 36), which are interposed between the piston (16, 18) and the bore (14), the front seal (30, 34) delimiting, in the bore (14), a rear supply chamber (38, 42) and a front pressure chamber (40, 44), of the type in which the body (12) comprises a radial supply duct (46, 52) which connects an external hydraulic fluid reservoir to the rear supply chamber (38, 42) and which opens out between the two seals (30, 32, 34, 36), of the type in which the body (12) comprises a braking circuit supply hole (54, 56) which opens into the front pressure chamber (40, 44), of the type in which the piston comprises a bore (58, 60), open to the front, communicating on the one hand with the front pressure chamber (40, 44) and on the other hand with the periphery of said piston (16, 18) by way of at least one hole (62, 64) which, when the piston (16, 18) occupies its rear rest position, is arranged between the two seals (30, 32, 34, 36) so as to open communication between the front pressure chamber (40, 44) and the rear supply chamber (38, 42) and which, when the piston (16, 18) is moved axially forward toward its application position, is capable of passing beyond the front seal (30, 34) in order to isolate the front pressure chamber (40, 44) from the rear supply chamber (38, 42) and thus make it possible to establish a braking pressure in the front pressure chamber (40, 44), of the type in which at least each front seal (30, 34) comprises at least one lip, arranged in contact with the periphery of the piston (16, 18), which is capable, when the front pressure chamber (40, 44) is exposed to a partial vacuum caused by the return of the piston (16, 18) from its forward application position to its rest position or else by the activation of a trajectory control device forming part of the braking circuit, of separating from the periphery of the piston (16, 18) so as to respectively allow the reservoir to be resupplied by means of the front pressure chamber (40, 44) or else the front pressure chamber (40, 44) to be resupplied by the reservoir,
**characterized in that** it comprises at least one wide groove (66, 68) which is formed in the bore (14) in front of a groove (70, 72) for retaining the front seal (30, 34), which extends at least in part around the piston (16, 18), and which communicates with said retaining groove (70, 72) and the hole (62, 64) in the piston, in order to allow the resupplies to occur with a high flow rate and **in that** said groove (70, 72) is limited in the front by said bore comprising said wide groove (66, 68) and in the rear by a land without groove.

2. Brake master cylinder (10) according to the preceding claim, **characterized in that** the groove (66, 68) is a helical groove with a large specified pitch (p).

3. Brake master cylinder (10) according to the preceding claim, **characterized in that** the helical groove (66, 68) extends axially over a distance (d) which is less than the specified pitch (p).

4. Brake master cylinder (10) according to any one of the preceding claims, **characterized in that** the groove (66, 68) opens directly into the retaining groove (70, 72) for the front seal (30, 34).

5. Master cylinder (10) according to any one of the preceding claims, **characterized in that** it at most comprises two wide grooves (66, 68) associated with the retaining groove (70, 72) for the front seal (30, 34) and with the piston (16, 18).

6. Master cylinder (10) according to any one of the preceding claims, **characterized in that** it is of the tandem type and comprises, in its substantially axial body (12), a bore inside which two axial pistons (16, 18) are slideably mounted, and two front seals (30, 34), and in which are formed at least two and at most four associated grooves (66, 68).

## Patentansprüche

1. Hauptbremszylinder (10) für ein Kraftfahrzeug, vom Typ mit einem im Wesentlichen axialen Körper (12) mit einer Öffnung (14), in der mindestens ein axialer Kolben (16, 18) gleitend angebracht ist, der von einem Fahrzeugfahrer zwischen einer hinteren Ruhestellung und einer vorderen Stellung zum Aufbringen einer Bremskraft betätigt werden kann und elastisch in seine hintere Ruhestellung zurückgestellt wird, vom Typ, bei dem die Öffnung (14) zwei vordere Dichtungen (30, 34) und zwei hintere Dichtungen (32, 36) aufweist, die zwischen dem Kolben (16, 18) und der Öffnung (14) angeordnet sind, wobei die vordere Dichtung (30, 34) in der Öffnung (14) eine hintere Versorgungskammer (38, 42) und eine vordere Druckkammer (40, 44) begrenzt, vom Typ, bei dem der Körper (12) eine radiale Versorgungsleitung (46, 52) aufweist, die einen äußeren Hydraulikfluidbehälter mit der hinteren Versorgungskammer (38, 42) verbindet und zwischen den beiden Dichtungen (30, 32, 34, 36) mündet, vom Typ, bei dem der Körper (12) eine Bohrung (54, 56) zur Versorgung eines Bremskreises aufweist, die in die vordere Druckkammer (40, 44) mündet, vom Typ, bei dem der Kolben eine nach vorne geöffnete Öffnung (58, 60) aufweist, die zum einen mit der vorderen Druckkammer (40, 44) und zum anderen über mindestens eine Bohrung (62, 64) mit dem Umfang des Kolbens (16, 18) verbunden ist, die in der hinteren Ruhestellung des Kolbens (16, 18) zwischen den beiden Dichtungen (30, 32, 34, 36) angeordnet ist, um die vordere Druckkammer (40, 44) und die hintere Versorgungskammer (38, 42) zu verbinden, und die bei einer axialen Verschiebung des Kolbens (16, 18) nach vorne in seine Beaufschlagungsstellung die vordere Dichtung (30, 34) überwinden kann, um die vordere Druckkammer (40, 44) von der hinteren Versorgungskammer (38, 42) zu trennen und somit den Aufbau eines Bremsdrucks in der vorderen Druckkammer (40, 44) zu ermöglichen, vom Typ, bei dem zumindest jede vordere Dichtung (30, 34) mindestens eine Lippe aufweist, die so angeordnet ist, dass sie den Umfang des Kolbens (16, 18) berührt, und die sich, wenn die vordere Druckkammer einem Unterdruck ausgesetzt ist, der durch das Zurückstellen des Kolbens (16, 18) von seiner vorderen Beaufschlagungsstellung in seine Ruhestellung oder durch die Aktivierung einer zum Bremskreis gehörenden Spurkontrollvorrichtung hervorgerufen wird, vom Umfang des Kolbens (16, 18) lösen kann, um das Nachfüllen des Behälters mit Hilfe der vorderen Druckkammer (40, 44) bzw. das Nachfüllen der vorderen Druckkammer (40, 44) über den Behälter zu ermöglichen,
**dadurch gekennzeichnet, dass** er mindestens eine Nut (66, 58) mit erhöhter Breite aufweist, die in der Öffnung (14) vor einer Rille (70, 72) zur Aufnahme der vorderen Dichtung (30, 34) gebildet ist, sich mindestens teilweise um den Kolben (16, 18) herum erstreckt, mit der Aufnahmerille (70, 72) und der Bohrung (62, 64) des Kolbens verbunden ist, um die Nachfüllungen gemäß einem hohen Durchsatz zu ermöglichen, und dass die Rille (70, 72) vorne durch die mit der Nut (66, 68) versehene Öffnung und hinten durch eine nutlose Auflagefläche begrenzt ist.

2. Hauptbremszylinder (10) nach dem vorhergehenden Anspruch, **dadurch gekennzeichnet, dass** die Nut (66, 68) eine Spiralnut mit bestimmter erhöhter Steigung (p) ist.

3. Hauptbremszylinder (10) nach dem vorhergehenden Anspruch, **dadurch gekennzeichnet, dass** die Spiralnut (66, 68) sich axial auf einer Länge (d) erstreckt, die kleiner ist als die bestimmte Steigung (p).

4. Hauptbremszylinder (10) nach einem der vorhergehenden Ansprüche, **dadurch gekennzeichnet, dass** die Nut (66, 68) unmittelbar in die Rille (70, 72) zur Aufnahme der vorderen Dichtung (30, 34) mündet.

5. Hauptbremszylinder (10) nach einem der vorhergehenden Ansprüche, **dadurch gekennzeichnet, dass** er höchstens zwei Nuten (66, 68) mit erhöhter Breite aufweist, die der Rille (70, 72) zur Aufnahme der vorderen Dichtung (30, 34) und dem Kolben (16, 18) zugeordnet sind.

6. Hauptbremszylinder (10) nach einem der vorhergehenden Ansprüche, **dadurch gekennzeichnet, dass** er vom Typ Tandem ist und in seinem im Wesentlichen axialen Körper (12) eine Öffnung aufweist, in welcher zwei axiale Kolben (16, 18) und zwei vordere Dichtungen (30, 34) angebracht sind und in welchem mindestens zwei und höchstens vier zugeordnete Nuten (66, 68) gebildet sind.
